## Europäisches Patentamt
## European Patent Office
## Office européen des brevets

(11) Veröffentlichungsnummer: **0 307 721 B1**

(19)

(12) # EUROPÄISCHE PATENTSCHRIFT

(45) Veröffentlichungstag der Patentschrift: **28.10.92**

(21) Anmeldenummer: **88114208.7**

(22) Anmeldetag: **31.08.88**

(51) Int. Cl.⁵: **H04B 10/00**, H04J 14/00, G05F 3/26

(54) Optischer Überlagerungsempfänger mit Dreifachfaserkoppler.

(30) Priorität: **11.09.87 DE 3730650**

(43) Veröffentlichungstag der Anmeldung:
**22.03.89 Patentblatt 89/12**

(45) Bekanntmachung des Hinweises auf die Patenterteilung:
**28.10.92 Patentblatt 92/44**

(84) Benannte Vertragsstaaten:
**AT BE DE FR GB IT**

(56) Entgegenhaltungen:
**EP-A- 0 194 786**
**GB-A- 2 130 451**

**IEE COLLOQUIUM ON ADVANCES IN COHERENT OPTICAL DEVICES AND TECHNOLOGIES, 26. März 1985, Seiten 11/1-11/5, Standard Telephones and Cables Plc, London, GB; A.W. DAVIS et al.: "A phase insensitive homodyne optical receiver"**

**ELECTRONICS LETTERS, Band 22, Nr. 8, 10. April 1986, Seiten 413-415, Stevenage, Herts, GB; B.L. KASPER et al.: "Balanced dual-detector receiver for optical heterodyne communication at Gbit/s rates"**

**IEEE JOURNAL OF SOLID-STATE CIRCUITS, Band SC-10, Nr. 6, Dezember 1975, Seiten 516-524, IEEE, New York, US; A. BILOTTI et al.: "Noise characteristics of current mirror sinks/sources"**

**INTERNATIONAL ELECTRONICS, Band 16, Nr. 3, Juli/September 1969, Seiten 5,9,12,27,29, Red Bank, N.J., US; H.M. KLEINMAN: "Design ideas for RCA linear integrated-circuit arrays"**

(73) Patentinhaber: **SIEMENS AKTIENGESELLSCHAFT**
**Wittelsbacherplatz 2**
**W-8000 München 2(DE)**

(72) Erfinder: **Pietzsch, Joachim, Dr.-Ing.**
**Waakirchnerstrasse 34**
**W-8000 München 70(DE)**

EP 0 307 721 B1

**Beschreibung**

Die Erfindung betrifft einen optischen Überlagerungsempfänger mit Eingängen für ein Empfangssignal und das Signal eines lokalen Lasers, mit einem, mit den Eingängen verbundenen Dreifach-Faserkoppler als optischem 120° Hybrid und mit an die Ausgänge des Dreifach-Faserkopplers optisch angekoppelten Fotodioden, deren Ausgangssignale über einen ersten bis dritten Fotostromverstärker und einen ersten bis dritten Signaldemodulator an drei Eingänge eines Summierers angelegt werden und daß an dessen Signalausgang das Datensignal entnehmbar ist.

Analog einem elektrischen Überlagerungsempfänger ist ein optischer Überlagerungsempfänger aufbaubar, bei dem ein optisches Empfangssignal mit dem Signal eines lokalen Lasers gemischt wird. Die Mischung geschieht dabei in einer Fotodiode als optoelektrischem Wandler, die Fotodioden geben damit unmittelbar ein elektrisches Signal in einer Zwischenfrequenzebene ab. Die Zwischenfrequenz ist dabei die Differenzfrequenz zwischen der Frequenz des Empfangssignals und der Schwingfrequenz des lokalen Lasers. Um die heute üblichen Datenraten von 565 Mbit/s oder gar die zukünftige Datenrate von 2,5 Gbit/s übertragen zu können, ist man gezwungen, eine sehr hohe Zwischenfrequenz zu wählen, die meist im Gigahertzbereich liegt. Damit ergibt sich aber die Notwendigkeit, in der Zwischenfrequenzebene hochempfindliche Verstärker mit sehr hoher Bandbreite und Grenzfrequenz einsetzen zu müssen. Entsprechend Electronics Letters vom 12.09.85, VOL 21, No. 19, Seiten 867 und 868 besteht bei Mehrtorempfang die Möglichkeit, optische Überlagerungsempfänger mit sehr niedrigen Zwischenfrequenzen einsetzen zu können, so daß Zwischenfrequenzverstärker mit einer Bandbreite einsetzbar sind, die etwa der Basisbandbreite bei Homodyn- oder Direktempfang entspricht.

Im Digest No 1985/30 zum IEE Colloquium on Advances in Coherent optical Devices and Techniques, London 1985, Seiten 11/1 bis 11/5 ist ein phasenunempfindlicher optischer Homodyempfänger mit einem Dreitorempfangsteil unter Verwendung eines 3x3 Faserkopplers als 120° Hybrid beschrieben, wegen der nichtidealen Phasencharakteristik dieses Kopplers ergibt sich ein Empfindlichkeitsverlust von 1,8 dB gegenüber dem optischen Überlagerungsempfänger mit einem Zweitor-Empfangsteil nach Electronics Letters, bei dem ein vergleichsweise sehr präziser 90° Hybrid benötigt wird. Auch in SPIE VOL 630 Fibre Optics (Sira) 1986, S. 28 - 32 wird ein breitbandiger optischer Phasen-Diversitäts-Homodynempfänger unter Verwendung eines Dreifach-Faserkopplers beschrieben. Mit den Ausgängen des Dreifach-Faserkopplers sind dabei optisch drei Fotodioden verbunden, in denen jeweils die Mischung zwischen gleich polarisierten Komponenten des Empfangslichts und des Lichts des lokalen Lasers erfolgt. Außerdem wird von den Fotodioden eine dem Mischungsprodukt entsprechende elektrische Komponente erzeugt und an nachgeschaltete Fotostromverstärker abgegeben. Die erzeugten Fotoströme sind dabei um 120° zueinander phasenverschoben und werden in nachgeschalteten Demodulatoren für das jeweils gewählte Modulationsverfahren in Basisbandsignale umgeformt. Diese Basisbandsignale werden in einem Summierer mit drei Eingängen zusammengefaßt, und es wird damit das demodulierte Datensignal erzeugt.

Nachteilig bei den geschilderten bekannten optischen Überlagerungsempfängern ist neben einem Empfindlichkeitsverlust bei Verwendung bekannter Dreifachkoppler das Auftreten des Laseramplitudenrauschens im Basisbandsignal und die Gleichstromkomponente im Fotostrom; sie verhindert oder erschwert wesentlich den Einsatz z. B. eines Hochimpedanzfotostromverstärkers.

Die Aufgabe bei der vorliegenden Erfindung besteht also darin, das Signal-Geräuschverhältnis bei optischen Überlagerungsempfängern der eingangs erwähnten Art zu verbessern und den zu verstärkenden Fotostrom möglichst gleichstromfrei zu erzeugen.

Erfindungsgemäß wird die Aufgabe durch einen optischen Überlagerungsempfänger der eingangs erwähnten Art gelöst, der entsprechend den im Kennzeichen des Patentanspruchs 1 enthaltenen Merkmale weitergebildet ist. Es entfällt dabei der Empfindlichkeitsverlust von 1,8 dB, wie er beim herkömmlichen Phasen-Diversitätsempfänger mit optischem 3 x 3-Koppler gegenüber dem Phasen-Diversitätsempfänger mit Zweitor auftritt. Von besonderem Vorteil beim erfindungsgemäßen optischen Überlagerungsempfänger ist die Unterdrückung der Gleichanteile im Fotostrom der Fotodioden zusammen mit der Unterdrückung des Laseramplitudenrauschens, so daß sich eine wesentliche Empfindlichkeitsverbesserung ohne wesentliche Aufwandserhöhung erreichen läßt.

Eine Ausführungsform mit besonders geringem Aufwand ist in Patantanspruch 2 beschrieben.

Eine bevorzugte Ausführungsform des erfindungsgemäßen optischen Überlagerungsempfängers ist im Patentanspruch 3 näher erläutert, zweckmäßige Ausbildungen der bei diesem optischen Überlagerungsempfänger verwendeten Stromspiegel sind für diskreten Aufbau in den Patentansprüchen 4 und 5 und für integrierten Aufbau in den Patentansprüchen 6 und 7 angegeben.

Die Erfindung soll im vorliegenden anhand in der Zeichnung dargestellter Ausführungsbeispiele näher erläutert werden.

Dabei zeigt

Fig. 1     den prinzipiellen Aufbau eines erfindungsgemäßen optischen Überlagerungsempfängers,

Fig. 2     einen erfindungsgemäßen optischen Überlagerungsempfänger mit einem, vorgespannte Fotodioden enthaltenden Eingangsteil,

Fig. 3     im Eingangsteil der Fig. 2 verwendbare Stromspiegel mit diskreten Elementen und

Fig. 4     im Eingangsteil der Fig. 2 verwendbare Stromspiegel in integrierter Technik.

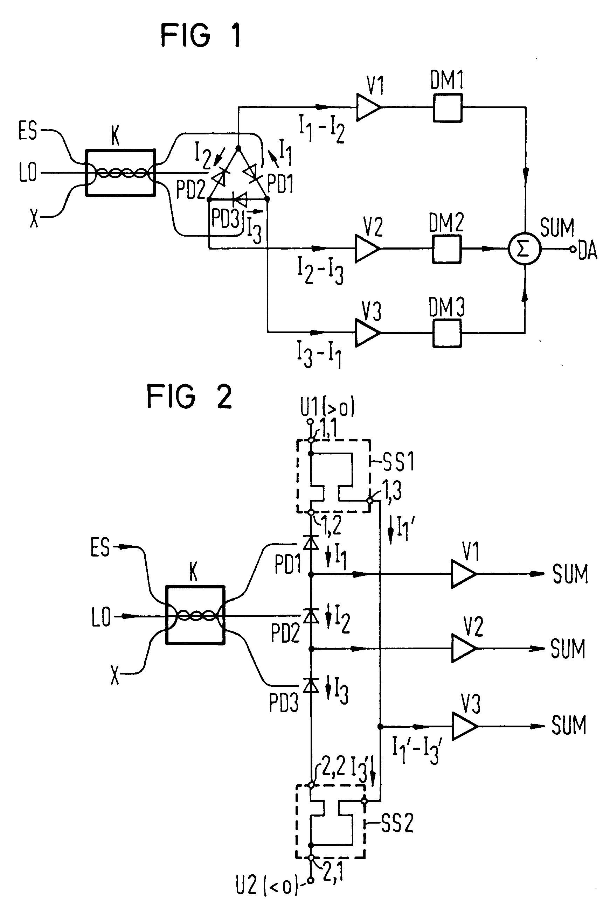

Der in der Fig. 1 dargestellte optische Überlagerungsempfänger ist als Gegentakt-Phasendiversitätsempfänger aufgebaut und enthält im optischen Eingangsteil einen Dreifach-Faserkoppler K. Der erste optische Eingangsanschluß des Dreifach-Faserkopplers K ist mit einer Quelle für ein Empfangssignal ES verbunden, an den zweiten Eingangsanschluß ist der lokale Laseroszillator LO angeschlossen, der dritte Eingangsanschluß bleibt unbeschaltet. Die drei Ausgangsanschlüsse des Dreifach-Faserkopplers sind optisch mit drei Fotodioden PD1, PD2, PD3 verbunden. Diese Fotodioden sind im Hinblick auf die nachgeschalteten Fotostromverstärker V1, V2, V3 jeweils im Gegentakt geschaltet, so daß in die Eingangsanschlüsse der Fotostromverstärker jeweils ein Differenz-Fotostrom fließt. Dazu ist der Anodenanschluß der ersten Fotodiode mit dem Katodenanschluß der zweiten Fotodiode und gleichzeitig mit dem Eingangsanschluß des ersten Fotostromverstärkers V1 verbunden. Entsprechend ist der Anodenanschluß der zweiten Fotodiode PD2, mit dem Katodenanschluß der dritten Fotodiode PD3, und mit dem Eingangsanschluß des zweiten Fotostromverstärkers V2 verbunden. In analoger Weise ist der Anodenanschluß der dritten Fotodiode PD3 mit dem Katodenanschluß der ersten Fotodiode und mit Eingangsanschluß des dritten Fotostromverstärkers V3 verbunden. Bezeichnet man die durch die erste, zweite und dritte Fotodiode PD1, PD2, PD3 fließenden Ströme mit $I_1$, $I_2$, $I_3$ dann fließt in den Eingangsanschluß des ersten Fotostromverstärkers die Differenz $I_1$-$I_2$, in den Eingangsanschluß des zweiten Fotostromverstärkers V2 die Differenz $I_2$-$I_3$ und in den Eingangsanschluß des dritten Fotostromverstärkers V3 die Differenz $I_3$-$I_1$. Die Fotostromverstärker in Form von Transimpedanz- oder Hochimpedanzverstärkern sind als Stromspannungswandler ausgelegt, so daß an deren Ausgängen den Fotostromdifferenzen entsprechende Spannungen entstehen. Den Fotostromverstärkern V1, V2, V3 ist jeweils ein erster, zweiter, dritte Demodulator DM1, DM2, DM3 für das jeweils gewählte Modulationsverfahren nachgeschaltet. Beim Ausführungsbeispiel wird Differenz-Pulsphasensprungmodulation (DPSK) verwendet, es ist auch bei entsprechend geänderten Demodulatoren -der Empfang von PSK- oder ASK - modulierten Signalen möglich. Fotostromverstärker und Demodulator bilden jeweils einen Signalkanal, wobei die Phase der in den Kanälen fließenden Ströme zueinander um jeweils 120° verschoben ist.

Für den Strom $I_n$ im Kanal n gilt näherungsweise:

$$I_n \simeq \frac{1}{3} K_n \left[ 2\sqrt{P_s P_o} \cos(\Delta\phi + \varphi_n) + P_o \right]$$

mit:

$P_s$, $P_o$     : Signalleistung, Leistung des lokalen Lasers

$\Delta\phi = \Delta\omega t + \phi_o$     : Phasendifferenz zwischen Empfangsignal und signal des lokalen Lasers

$K_n = \dfrac{e\,\eta\,n}{h\,\nu}$     : Proportionalitätsfaktor zwischen Fotostrom und Lichtleistung.

Die Schrotrauschleistung im Kanal n lautet:

$$N_n \simeq \frac{2}{3} e\, K_n P_o B,$$

wobei B die Rauschbandbreite ist.

Die Modulation erfolgt bei DPSK durch Tastung der Phase $\Phi o$. Die Demodulation in Form einer Hüllkurvendemodulation erfolgt wie bisher getrennt in jedem Kanal vor der Summation der drei Kanäle.

Das maximale Signal-Geräuschverhältnis in einem Kanal beträgt mit dem bisherigen Verfahren

3

$$( |\cos \ (\Delta \phi + \varphi_n)| \ = 1)$$

$$\varsigma_{alt} \ = \frac{1}{2} \ \frac{I_n{}^2}{N_n} \ = \ \frac{K_n \ P_s}{3 \ e \ B} \ = \ \frac{\eta \ n \ P_s}{3 \ h \nu \ B} \ .$$

Dies ist um den Faktor 3 oder 4,8 dB schlechter als der ideale Homodynempfang. Der Dreifachkoppler ist symmetrisch, d.h. $\phi_n = n \cdot 120°$ und $K_n = K$. Der maximale Differenzstrom hat damit die Größe

$$I_{n+1} - I_n \ |_{max} = \sqrt{3} \tfrac{2}{3} K \sqrt{P_s \ P_o}.$$

Das Signal-Geräuschverhältnis erreicht nun ($N_{neu} = 2N_n$)

$$\varsigma_{neu} \ = \ \frac{1}{2} \ \frac{\eta \ P_s}{h \nu \ B} \ ,$$

d. h. es ist nur 3 dB schlechter als der ideale Homodynempfang. Zudem ist das Differenzsignal gleichstromfrei und frei von eventuellem Laseramplitudenrauschen.

Als Fotodioden sind beim Ausführungsbeispiel pin-Dioden verwendet worden. Die Demodulatoren DM1 - DM3 sind DPSK-Demodulatoren. Der Summierer ist als Emitterfolger mit drei Eingängen ausgeführt. Geringe Unsymmetrien des Faserkopplers können durch unterschiedliche Ankopplung an die Fotodioden und/oder durch unterschiedliche Einstellung der internen Verstärkung bei Einsatz von Lawinenmultiplikationsdioden und/oder durch Korrekturglieder bei der Bildung der Differenzfotoströme korrigiert werden.

In der Figur 2 ist ein Eingangsteil eines optischen Überlagerungsempfängers nach dem Phasendiversitätsprinzip mit vorgespannten Fotodioden dargestellt. Die Fotodioden PD1, PD2, PD3 erhalten jeweils eine Vorspannung durch einen ersten bzw. zweiten Stromspiegel SS1, SS2, die ihrerseits an eine erste bzw. zweite Spannungsquelle U1, U2 angeschlossen sind. Die Aufteilung der Vorspannungen auf die Dioden wird durch die Festlegung der Gleichspannungsarbeitspunkte oder Fotostromverstärker V1 und V2 bewirkt. Wie beim Überlagerungsempfänger nach der Figur 1 sind auch beim Überlagerungsempfänger nach der Figur 2 die Anode der ersten Fotodiode PD1 und die Katode der zweiten Fotodiode PD2 sowie der Eingangsanschluß des ersten Fotostromverstärkers V1 miteinander verbunden, auch die Verbindung von der Anode der zweiten Fotodiode PD2 zur Katode der dritten Fotodiode PD3 und zum Eingangsanschluß des zweiten Fotostromverstärkers V2 entspricht Figur 1. Zusätzlich sind zwei Spannungsquellen U1, U2 vorgesehen, die die Vorspannung für die Fotodioden liefern. Die Zuführung der Vorspannung erfolgt dabei über einen ersten Stromspiegel SS1, dessen erster Anschluß 1,1 mit der ersten Betriebsspannungsquelle U1 und dessen zweiter Anschluß 1,2 mit der Katode der ersten Fotodiode PD1 verbunden ist. Damit fließt über den zweiten Anschluß 1,2 der Strom $I_1$, der wegen der Stromspiegelung auch aus dem dritten Anschluß 1,3 des ersten Stromspiegels SS1 in Form des Stroms $I_1{}'$ fließt. Mit der zweiten Betriebsspannungsquelle U2 ist der zweite Stromspiegel SS2 über dessen ersten Anschluß 2,1 verbunden. Der zweite Anschluß dieses Stromspiegels ist an die Anode der dritten Fotodiode PD3 angeschlossen, so daß über diesen zweiten Anschluß 2,2 der Strom $I_3$ fließt. Entsprechend der Stromspiegelwirkung fließt über den dritten Anschluß 2,3 des zweiten Stromspiegels SS2 ein gleich großer Strom $I_3{}'$, so daß am Verbindungspunkt der dritten Anschlüsse des ersten und des zweiten Stromspiegels SS1, SS2 der Differenzstrom $I_1{}' - I_3{}'$ abgenommen und dem Eingangsanschluß des dritten Fotostromverstärkers V3 zugeführt werden kann.

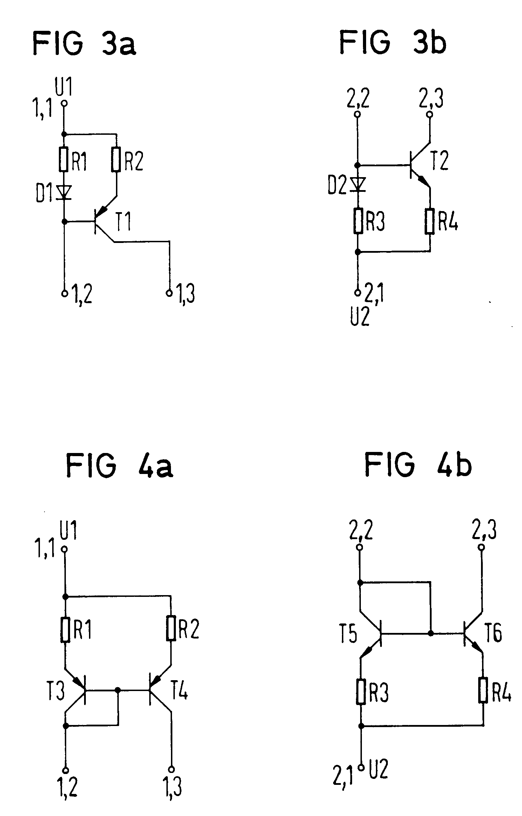

Der Aufbau eines Stromspiegels aus einem Transistor und einer zu dessen Basis-Emitterstrecke parallelgeschalteten Diode ist bekannt. In der Figur 3a ist dieses Prinzip zur Realisierung des ersten Stromspiegels SS1 mittels diskreter Bauelemente angewendet. Mit dem Anschluß 1,1 sind die ersten Anschlüsse eines ersten und eines zweiten Widerstandes R1, R2 verbunden. Der zweite Anschluß des ersten Widerstands ist über eine erste Diode D1 mit dem Basisanschluß eines ersten Transistors T1 mit pnp-Schichtenfolge verbunden, der zweite Anschluß des zweiten Widerstandes R2 ist mit dem Emitteranschluß des ersten Transistors T1 verbunden, der Basisanschluß dieses Transistors stellt den Anschluß 1,2 und der Kollektoranschluß stellt den Anschluß 1,3 des ersten Stromspiegels SS1 dar.

In der Figur 3b ist eine entsprechende Realisierung des zweiten Stromspiegels SS2 mittels diskreter Bauelemente dargestellt. Mit dem Anschluß 2.1 sind die ersten Anschlüsse eines dritten und eines vierten Widerstandes R3, R4 verbunden. Der zweite Anschluß des dritten Widerstandes R3 ist über eine zweite Diode D2 mit dem Basisanschluß eines zweiten Transistors T2 mit npn-Schichtenfolge und außerdem mit dem Anschluß 2.2 des zweiten Stromspiegels SS2 verbunden. Der zweite Anschluß des vierten Widerstandes R4 ist an den Emitteranschluß des zweiten transistors T2 angeschlossen, der Kollektoranschluß dieses Transistors stellt den Anschluß 2.3 des zweiten Stromspiegels SS2 dar.

In der Fig. 4 ist die Realisierung der Stromspiegel SS1 und SS2 in integrierter Technik dargestellt. Gegenüber der Anordnung nach Fig. 3a ist bei der Anordnung nach Figur 4a die Diode D1 durch einen dritten Transistor T3 ersetzt. Der Emitteranschluß dieses Transistors stellt dabei den Anodenanschluß der Diode D1 dar, der Kollektor- und der Basisanschluß dieses Transistors sind miteinander und mit dem Basisanschluß eines vierten Transistors T1 vom pnp-Typ verbunden und stellen den Anschluß 1.2 des ersten Stromspiegels SS1 dar.

In der Fig. 4b ist anstelle der zweiten Diode D2 nach Fig. 3b ein fünfter Transistor T5 vom npn-Typ vorgesehen. Dabei stellt der Emitteranschluß dieses Transistors den Katodenanschluß der zweiten Diode D2 dar, während der Anodenanschluß durch die miteinander verbundenen Kollektor- und Basisanschlüsse des fünften Transistors T5 gebildet werden und damit den Anschluß 2.2. des zweiten Stromspiegels SS2 darstellen. Der Anschluß 2,3 wird durch den Kollektoranschluß eines sechsten Transistors vom npn-Typ gebildet.

Bei der Ausführung in integrierter Technik weisen benachbarte Transistorelemente sehr gleichmäßige Eigenschaften auf, so daß in diesem Falle die Emitterwiderstände R1... R4 entfallen können.

## Patentansprüche

1. Optischer Überlagerungsempfänger mit Eingängen für ein Empfangssignal und das Signal eines lokalen Lasers, mit einem, mit den Eingängen verbundenen wenigstens annähernd symmetrischen Dreifach-Faserkoppler (K) als optischem 120° Hybrid und mit an die Ausgänge des Dreifach-Faserkopplers optisch angekoppelten Fotodioden (PD1, PD2, PD3), deren Ausgangssignale über einen ersten bis dritten Fotostromverstärker (V1, V2, V3) und einen ersten bis dritten Signaldemodulator (DM1, DM2, DM3) an drei Eingänge eines Summierer (SUM) angelegt werden und daß an dessen Signalausgang das Datensignal (DA) entnehmbar ist,
   **dadurch gekennzeichnet,**
   daß die Fotodioden (PD1, PD2, PD3) im Hinblick auf die nachgeschalteten Fotostromverstärker (V1, V2, V3) jeweils im Gegentakt geschaltet sind, so daß an den Eingängen der Fotostromverstärker (V1, V2, V3) jeweils die Differenz der Fotoströme zweier Fotodioden anliegt.

2. Optischer Überlagerungsempfänger nach Anspruch 1,
   **dadurch gekennzeichnet,**
   daß der Anodenanschluß der ersten Fotodiode (PD1) mit dem Katodenanschluß der zweiten Fotodiode (PD2) und mit dem Eingangsanschluß des ersten Fotostromverstärkers (V1) verbunden ist, daß der Anodenanschluß der zweiten Fotodiode (PD2) mit dem Katodenanschluß der dritten Fotodiode (PD3) und mit dem Eingangsanschluß des zweiten Fotostromverstärkers (V2) verbunden ist und daß der Anodenanschluß der dritten Fotodiode (PD3) mit dem Katodenanschluß der ersten Fotodiode (PD1) und mit dem Eingangsanschluß des dritten Fotostromverstärkers (V3) verbunden ist.

3. Optischer Überlagerungsempfänger nach Ansprüchen 1 oder 2,
   **dadurch gekennzeichnet,**
   daß mit einem ersten Betriebsspannungsanschluß (U1) der erste Anschluß (1,1) eines ersten Stromspiegels (SS1) angeschlossen ist, daß dessen zweiter Anschluß (1,2) mit dem Katodenanschluß der ersten Fotodiode (PD1) verbunden ist,
   daß der Anodenanschluß der ersten Fotodiode (PD1) mit dem Katodenanschluß der zweiten Fotodiode (PD2) und mit dem Eingangsanschluß des ersten Fotostromverstärkers (V1) verbunden ist, daß daß der Anodenanschluß der zweiten Fotodiode (PD2) mit dem Katodenanschluß der dritten Fotodiode (PD3) und mit dem Eingangsanschluß des zweiten Fotostromverstärkers (V2) verbunden ist, daß eine zweite Stromspiegelschaltung (SS2) vorgesehen ist, deren erster Anschluß (2,1) mit einer zweiten Betriebsspannungsquelle (U2) verbunden ist,
   daß der zweite Anschluß (2,2) der zweiten Stromspiegelschaltung (SS2) mit der Anode der dritten Fotodiode (PD3) verbunden ist und daß die dritten Anschlüsse (1,3; 2,3) des ersten und des zweiten Stromspiegels (SS1, SS2) miteinander und mit dem Eingang des dritten Fotostromverstärkers (V3) verbunden sind.

**4.** Optischer Überlagerungsempfänger nach Anspruch 3,
**dadurch gekennzeichnet,**
daß der erste Stromspiegel (SS1) einen ersten und einen zweiten Widerstand (R1, R2) enthält, deren erste Anschlüsse miteinander und mit dem ersten Anschluß (1,1) des ersten Stromspiegels (SS1) verbunden sind,
daß der zweite Anschluß des ersten Widerstands (R1) über eine erste Diode (D1) mit dem Basisanschluß eines ersten Transistors (T1) vom pnp-Typ und mit dem zweiten Anschluß (1,2) des ersten Stromspiegels (SS1) verbunden ist,
daß der zweite Anschluß des zweiten Widerstandes (R2) mit dem Emitteranschluß des ersten Transistors (T1) verbunden ist und daß der Kollektoranschluß des ersten Transistors (T1) mit dem dritten Anschluß (1,3) der ersten Stromspiegelschaltung (SS1) verbunden ist.

**5.** Optischer Überlagerungsempfänger nach Anspruch 3,
**dadurch gekennzeichnet,**
daß der zweite Stromspiegel (SS2) einen dritten und einen vierten Widerstand (R3, R4) enthält, deren erste Anschlüsse miteinander und mit dem ersten Anschluß (2,1) des zweiten Stromspiegels (SS2) verbunden sind,
daß der zweite Anschluß des dritten Widerstands (R3) über eine zweite Diode (D2) mit dem Basisanschluß eines zweiten Transistors (T2) vom npn-Typ und mit dem zweiten Anschluß (2,2) der zweiten Stromspiegelschaltung (SS2) verbunden ist,
daß der zweite Anschluß des vierten Widerstandes (R4) mit dem Emitteranschluß des zweiten Tranistors (T2) verbunden ist und daß der Kollektoranschluß dieses Transistors (T2) mit dem dritten Anschluß (2,3) der zweiten Stromspiegelschaltung (SS2) verbunden ist.

**6.** Optischer Überlagerungsempfänger nach Anspruch 4,
**dadurch gekennzeichnet,**
daß als Diode ein dritter Transistor (T3) vorgesehen ist, dessen Emitteranschluß mit dem zweiten Anschluß des ersten Widerstandes (R1) verbunden ist und dessen Kollektor- und Basisanschlüsse miteinander, mit dem Basisanschluß eines vierten Transistors (T4) sowie mit dem zweiten Anschluß (1,2) des ersten Stromspiegels (SS1) verbunden sind und
daß der dritte und der vierte Transistor (T3, T4) pnp-Transistoren sind.

**7.** Optischer Überlagerungsempfänger nach Anspruch 5,
**dadurch gekennzeichnet,**
daß als Diode (D2) ein fünfter Transistor (T5) vorgesehen ist, dessen Emitteranschluß mit dem zweiten Anschluß des dritten Widerstandes (R3) verbunden ist, und dessen Basis und Kollektoranschlüsse miteinander, mit dem Basisanschluß eines sechsten Transistors (T6) sowie mit dem zweiten Anschluß (2,2) des zweiten Stromspiegels (SS2) verbunden sind und
daß der fünfte und der sechste Transistor (T5, T6) npn-Transistoren sind.

**Claims**

**1.** Optical heterodyne receiver having inputs for a reception signal and the signal of a local laser, having an at least approximately symmetric six-port fibre coupler (K), connected to the inputs, as an optical 120° hybrid and having photodiodes (PD1, PD2, PD3) optically coupled to the outputs of the six-port fibre coupler, the output signals of which photodiodes are applied via a first to third photocurrent amplifier (V1, V2, V3) and a first to third signal demodulator (DM1, DM2, DM3) to three inputs of a summator (SUM), and in that the data signal (DA) can be derived from the signal output thereof, characterised in that the photodiodes (PD1, PD2, PD3) are connected in each instance in push-pull with respect to the downstream photocurrent amplifiers (V1, V2, V3), so that in each instance the difference of the photocurrents of two photodiodes is present at the inputs of the photocurrent amplifiers (V1, V2, V3).

**2.** Optical heterodyne receiver according to Claim 1, characterised in that the anode connection of the first photodiode (PD1) is connected to the cathode connection of the second photodiode (PD2) and to the input connection of the first photocurrent amplifier (V1), in that the anode connection of the second photodiode (PD2) is connected to the cathode connection of the third photodiode (PD3) and to the input connection of the second photocurrent amplifier (V2), and in that the anode connection of the third photodiode (PD3) is connected to the cathode connection of the first photodiode (PD1) and to the input connection of the third photocurrent amplifier (V3).

3. Optical heterodyne receiver according to Claims 1 or 2, characterised in that to a first operating voltage connection (U1) there is connected the first connection (1, 1) of a first current reflector (SS1), in that the second connection (1, 2) thereof is connected to the cathode connection of the first photodiode (PD1), in that the anode connection of the first photodiode (PD1) is connected to the cathode connection of the second photodiode (PD2) and to the input connection of the first photocurrent amplifier (V1), in that the anode connection of the second photodiode (PD2) is connected to the cathode connection of the third photodiode (PD3) and to the input connection of the second photocurrent amplifier (V2), in that a second current reflector circuit (SS2) is provided, the first connection (2, 1) of which is connected to a second operating voltage source (U2),
in that the second connection (2, 2) of the second current reflector circuit (SS2) is connected to the anode of the third photodiode (PD3), and in that the third connections (1, 3; 2, 3) of the first and of the second current reflector (SS1, SS2) are connected to one another and to the input of the third photocurrent amplifier (V3).

4. Optical heterodyne receiver according to Claim 3, characterised in that the first current reflector (SS1) includes a first and a second resistor (R1, R2), the first connections of which are connected to one another and to the first connection (1, 1) of the first current reflector (SS1),
in that the second connection of the first resistor (R1) is connected via a first diode (D1) to the base connection of a first transistor (T1) of the pnp type and to the second connection (1, 2) of the first current reflector (SS1),
in that the second connection of the second resistor (R2) is connected to the emitter connection of the first transistor (T1), and in that the collector connection of the first transistor (T1) is connected to the third connection (1, 3) of the first current reflector circuit (SS1).

5. Optical heterodyne receiver according to Claim 3, characterised in that the second current reflector (SS2) includes a third and a fourth resistor (R3, R4), the first connections of which are connected to one another and to the first connection (2, 1) of the second current reflector (SS2),
in that the second connection of the third resistor (R3) is connected via a second diode (D2) to the base connection of a second transistor (T2) of the npn type and to the second connection (2, 2) of the second current reflector circuit (SS2), in that the second connection of the fourth resistor (R4) is connected to the emitter connection of the second transistor (T2), and in that the collector connection of this transistor (T2) is connected to the third connection (2, 3) of the second current reflector circuit (SS2).

6. Optical heterodyne receiver according to Claim 4, characterised in that as diode there is provided a third transistor (T3), the emitter connection of which is connected to the second connection of the first resistor (R1) and the collector and base connections of which are connected to one another, to the base connection of a fourth transistor (T4) and to the second connection (1, 2) of the first current reflector (SS1), and in that the third and the fourth transistor (T3, T4) are pnp transistors.

7. Optical heterodyne receiver according to claim 5, characterised in that as diode (D2) there is provided a fifth transistor (T5), the emitter connection of which is connected to the second connection of the third resistor (R3), and the base and collector connections of which are connected to one another, to the base connection of a sixth transistor (T6) and to the second connection (2, 2) of the second current reflector (SS2), and in that the fifth and the sixth transistor (T5, T6) are npn transistors.

**Revendications**

1. Récepteur optique superhétérodyne comportant des entrées pour un signal de réception et le signal d'un laser local, un coupleur de fibres triple (K) raccordé aux entrées et au moins approximativement symétrique et constitué sous la forme d'un circuit hybride optique à 120°, et des photodiodes (PD1,PD2,PD3) couplées optiquement aux sorties du coupleur à fibres triple et dont les signaux de sortie sont appliqués, par l'intermédiaire de premier, second et troisième amplificateurs de courant photoélectrique (V1,V2,V3) et des premier, second et troisième démodulateurs de signaux (DM1,DM2,DM3), à trois entrées d'un additionneur (SUM), et que le signal de données (DA) peut être prélevé sur la sortie des signaux de cet additionneur,
caractérisé par le fait que les photodiodes (PD1,PD2,PD3) sont branchées respectivement en opposition, en ce qui concerne les amplificateurs de courant photoélectrique (V1,V2,V3) montés en aval, de sorte que la différence des courants photoélectriques de deux photodiodes est appliquée aux entrées des amplificateurs de courant photoélectrique (V1,V2,V3).

2. Récepteur optique superhétérodyne suivant la revendication 1, caractérisé par le fait que la borne d'anode de la première photodiode (PD1) est raccordée à la borne de cathode de la seconde photodiode (PD2) et à la borne d'entrée du premier amplificateur de courant photoélectrique (V1), que la borne d'anode de la seconde photodiode (PD2) est raccordée à la borne de cathode de la troisième photodiode (PD3) et à la borne d'entrée du second amplificateur de courant photoélectrique (V2) et que la borne d'anode de la troisième photodiode (PD3) est raccordée à la borne de cathode de la première photodiode (PD1) et à la borne d'entrée du troisième amplificateur de courant photoélectrique (V3).

3. Récepteur optique superhétérodyne suivant les revendications 1 ou 2, caractérisé par le fait que la première borne (1,1) d'un premier miroir de courant (SS1) est raccordée à la première borne (U1) de la tension de service, que la seconde borne (1,2) du miroir de courant est raccordée à la borne de cathode de la première photodiode (PD1), que la borne d'anode de la première photodiode (PD1) est raccordée à la borne de cathode de la seconde photodiode (PD2) et à la borne d'entrée du premier amplificateur de courant photoélectrique (V1), que la borne d'anode de la seconde photodiode (PD2) est raccordée à la borne de cathode de la troisième photodiode (PD3) et à la borne d'entrée du second amplificateur de courant photoélectrique (V2), qu'il est prévu un second circuit formant miroir de courant (SS2), dont la première borne (2,1) est raccordée à une seconde source de tension de service (U2), que la seconde borne (2,2) du second circuit formant miroir de courant (SS2) est raccordée à l'anode de la troisième photodiode (PD3) et que les troisièmes bornes (1,3; 2,3) des premier et second miroirs de courant (SS1,SS2) sont raccordées entre elles et à l'entrée du troisième amplificateur de courant photoélectrique (V3).

4. Récepteur optique superhétérodyne suivant la revendication 3, caractérisé par le lait que le premier miroir de courant (SS1) comporte des première et seconde résistances (R1,R2), dont les premières bornes sont raccordées entre elles et à la première borne (1,1) du premier miroir de courant (SS1), que la seconde borne de la première résistance (R1) est raccordée, par l'intermédiaire d'une première diode (D1) à la borne de base d'un premier transistor (T1) du type pnp et à la seconde borne (1,2) du premier miroir de courant (SS1), que la seconde borne de la seconde résistance (R2) est raccordée à la borne d'émetteur du premier transistor (T1) et que le collecteur du premier transistor (T1) est raccordé à la troisième borne (1,3) du premier circuit formant miroir de courant (SS1).

5. Récepteur optique superhétérodyne suivant la revendication 3, caractérisé par le fait que le second miroir de courant (SS2) comporte des troisième et quatrième résistances (R3,R4), dont les premières bornes sont raccordées entre elles et à la première borne (2,1) du second miroir de courant (SS2), que la seconde borne de la troisième résistance (R3) est raccordée par l'intermédiaire d'une seconde diode (D2) à la borne de base d'un second transistor (T2) du type npn et à la seconde borne (2,2) du second circuit formant miroir de courant (SS2), que la seconde borne de la quatrième résistance (R4) est raccordée à la borne d'émetteur du second transistor (T2) et que la borne de collecteur de ce transistor (T2) est raccordée à la troisième borne (2,3) du second circuit formant miroir de courant (SS2).

6. Récepteur optique superhétérodyne suivant la revendication 4, caractérisé par le fait qu'il est prévu, en tant que diode, un troisième transistor (T3), dont la borne d'émetteur est raccordée à la seconde borne de la première résistance (R1) et dont les bornes de collecteur et de base sont raccordées entre elles, à la borne de base d'un quatrième transistor (T4) ainsi qu'à la seconde borne (1,2) du premier miroir de courant (SS1), et que les troisième et quatrième transistors (T3,T4) sont des transistors pnp.

8

**7.** Récepteur optique superhétérodyne suivant la revendication 5, caractérisé par le fait qu'il est prévu, en tant que diode (D2), un cinquième transistor (T5), dont la borne d'émetteur est raccordée à la seconde borne de la troisième résistance (R3) et dont les bornes de base et de collecteur sont raccordées entre elles, à la borne de base d'un sixième transistor (T6) ainsi qu'à la seconde borne (2,2) du second miroir de courant (SS2), et

que les cinquième et sixième transistors (T5,T6) sont des transistors npn.

## FIG 1

## FIG 2

10

# FIG 3a

# FIG 3b

# FIG 4a

# FIG 4b